# EUROPEAN PATENT APPLICATION

(11) **EP 3 567 206 A1**
(43) Date of publication of application: **13.11.2019**
(21) Application number: 18171785.1
(22) Date of filing: 11.05.2018
(51) Int. Cl.: E06B 9/72, H02K 7/14, E06B 9/50

(54) **MODULAR DRIVE SYSTEM FOR A WINDOW BLIND**

(71) Applicant: Q Torq Ltd., Old Warden, Beds. SG18 9LR (GB)
(72) Inventor: Dibben, Martin, Beds, SG18 9LR (GB); Newhook, Paul, Buckingham, MK18 7BD (GB); Boast, Gerry, Bath, BA2 9AF (GB)
(74) Representative: Jönrup, Emil

(57) **Abstract**

The invention relates to a drive system module (12) for a drive system (6) for being arranged in a roller for rotating the roller, wherein the drive system module (12) has an axial extension direction (16) and comprises a first mechanical connection arrangement (18) at a first end (20) in the axial extension direction for a static connection with a complimentary shaped mechanical connection arrangement (22) of another drive system module (10).

## Description

### TECHNICAL FIELD

The invention relates to a drive system for being arranged in a roller for rotating the roller. More specifically, the drive system may be used for operating a window blind, shutter, awning or curtain. A typical window blind uses a roll of cloth which can be unrolled from, or rolled onto, the roller. The roller is typically arranged above a window, wherein the cloth may be deployed to cover or retracted to uncover the window when the roller is rotated. The roller may be formed by a steel or aluminium tube. Such a drive system comprising an electric motor may be housed inside the cloth roller and called a "tubular motor".

Existing blind solutions have a variety of different drive motors to power the cloth roller, wherein the design depends on the speed and torque requirements for a specific application. Thus, the motor manufacturer has to produce a variety of different drive motor types and the window blind manufacturer/assembler as well as the motor manufacturer has to hold stock of numerous variations of motor according to size of blind and end user requirement.

### SUMMARY

An object of the invention is to achieve a drive system module, which creates conditions for a drive system, which can meet the speed and torque requirements for different applications, in a cost-efficient way in terms of manufacturing and/or stock.

The object is achieved by a drive system module according to claim 1. Thus, it is achieved by a drive system module for a drive system for being arranged in a roller for rotating the roller, wherein the drive system module has an axial extension direction and is adapted for connection to another drive system module at a first end in the axial extension direction.

A drive system for specific speed and torque requirements may be achieved by axially interconnecting a plurality of such drive system modules. More specifically, two or more adjacent drive system modules may be directly interconnected. One type of module comprises an electric motor. Other module types may comprise a controller, brake, battery and/or spring. Thus, a certain module may be axially directly connected to another module of the same type (in the case of electric motor modules) or of a different type.

More specifically, the drive system modules may be designed for being engageable with each other in different combinations for different requirements, which creates conditions for a reduced stock of components for manufacturers and fabricators.

For example, the modularity creates conditions for interconnecting multiple, but identical electric motor modules for meeting a certain torque requirement. Thus, the modularity is efficient in that it creates conditions for a high volume production of a single type of motor module.

The modules may be interconnected outside of the roller and introduced into the roller in unison. The modules may be sequentially fitted into the roller, and connected axially while being aligned with each other (arranged straight). Thus, the modules may be unitarily connected beforehand in an axially aligned condition.

According to one embodiment, the drive system module comprises a first mechanical connection arrangement at the first end in the axial extension direction for the connection with a complimentary shaped mechanical connection arrangement of said another drive system module.

According to one example, the first mechanical connection arrangement at the first end in the axial extension direction is adapted for a static connection with a complimentary shaped mechanical connection arrangement of another drive system module. Further, the first mechanical connection arrangement is adapted for being static during operation of the drive system.

According to one example, the mechanical connection arrangements are adapted for disassembly of interconnected drive system modules. It creates conditions for an easy and time-efficient disassembly of the drive system for example for servicing.

According to a further preferred embodiment, the first mechanical connection arrangement comprises a first mechanical connection means positioned radially centrally at the first end of the drive system module. According to one example, the first mechanical connection means is positioned at a radial distance from a center axis towards a radial periphery of the module less than 70% and preferably less than 50% of the radius of the module. Preferably, the first mechanical connection means is positioned co-axially with a center axis of the module. For example, when the module comprises an electric motor of a type with inner stator and outer rotor, the first mechanical connection means may be rigidly attached to or form an integral part of the stator.

According to a further preferred embodiment, the first mechanical connection means comprises a shaft end extending in parallel with the axial extension direction of the drive system module. This solution creates conditions for a secure and repeatable mechanical alignment between the modules, which is especially desirable when interconnecting two motor modules. More specifically, when linking two or more motor modules, operated by a single controller, it is desirable that accurate alignment is maintained between the motors, so that the magnetic fields align.

According to a further preferred embodiment, the first mechanical connection arrangement comprises a portion extending in a transverse direction relative to the axial extension direction of the drive system module for rigidly connecting the drive system modules to each other. The portion may be formed by a hole for a fastener. The other drive system module may comprise a similarly directed hole for alignment (in line) with the first-mentioned hole for receipt of a fastener in both holes for fastening the first drive system module to the second drive system module. Alternatively, the portion may be formed by a part of a fastener.

According to a further preferred embodiment, the drive system module comprises a first electrical connection arrangement at the first end in the axial extension direction for a connection with a complimentary shaped electrical connection arrangement of the other drive system module for controlling an operation of one of the drive system modules by or via the other one of the drive system modules.

For example, the drive system module may comprise an electric motor and the other drive system module may comprise a controller, wherein the controller is adapted to control the electric motor. Further, the connectors for the electrical wiring may form a primary or secondary mechanical connection between the modules.

According to a further preferred embodiment, the drive system module comprises a second mechanical connection arrangement at a second end in the axial extension direction opposite the first end for a static connection with a complimentary shaped mechanical connection arrangement of a further other drive system module. The second mechanical connection arrangement may be identical to the complimentary shaped mechanical connection arrangement of said another drive system module, wherein a plurality of drive system modules may be arranged in a plurality of different combinations.

This embodiment creates conditions for a cost-efficient production and space-efficient stock in that a specific set of modules may be selected for a specific torque and speed requirement and the modules may be axially interconnected at opposite ends in the axial direction. For example, the set of modules may comprise a plurality of drive system modules with an electric motor. More specifically, the electric motor modules may be of identical type and the number of electric motor modules may be selected for the specific torque requirement.

According to a further development of the last-mentioned embodiment, the first mechanical connection arrangement and the second mechanical connection arrangement are of the same type.

This embodiment creates conditions for manufacturing a minimum of module variations comprising only one type of electric motor module and one type of controller module per size of roller with typically three sizes of roller being catered for.

For example, both the first mechanical connection arrangement and the second mechanical connection arrangement may comprise shaft ends and preferably opposite shaft ends of a single shaft. The shaft ends may be designed for an axial overlap with the respective associated shaft end of an adjacent drive system module.

According to a further development of the last-mentioned embodiment, the first mechanical connection arrangement and the second mechanical connection arrangement are arranged in an inverse relationship relative to one another. More specifically, the first mechanical connection arrangement and the second mechanical connection arrangement may be arranged in an inverse relationship relative to one another relative to a plane commensurate with a central axis of the drive system module. For example, the second mechanical connection arrangement on the second side is in a mirrored relationship with the first mechanical connection arrangement on the first side.

According to one example, all modules are designed with the same type of mechanical connection arrangements in the inverse relationship at the first and second end, respectively, so that any module may be directly interconnected to any other module.

According to a further development of the last-mentioned embodiment, the second mechanical connection arrangement comprises a second mechanical connection means, wherein the drive system module comprises a shaft extending in the axial extension direction and wherein the shaft ends are adapted to form the first mechanical connection means at the first end and the second mechanical connection means at the second end.

According to a further example, the module comprises a drive system functional component and a tubular casing encapsulating the component. The tubular casing may have a circular outer cross section shape. In the case that drive system functional component is an electrical motor, the tubular casing is adapted to form part of the rotor. In the case that drive system functional component is a controller, the tubular casing may be adapted to rotate when a rotor of an associated electric motor is rotated. For example, the controller module may be provided with a bearing at an inner end distant from the electrical motor module for supporting the rotation of the outer casing.

According to a further preferred embodiment, the drive system module comprises an electric motor. According to one example, the electric motor is a permanent magnet motor. Further, preferably, the electric motor is of a type with radial flux. Thus, a radial-flux permanent-magnet motor. According to a further example, each electric motor module/unit comprises a single set of stator and rotor.

According to a further development of the last-mentioned embodiment, the electric motor is of a type with an internal stator and an external rotor. The external rotor may comprise the tubular casing internally lined with a plurality of circumferentially spaced magnets. Further, the stator is provided with a cage with windings. Further, the stator comprises the inner shaft with the mechanical arrangements at either end. Thus, the stator provided with windings is held static down the centre of the roller. Thus, when the stator is powered, the outer casing will rotate.

Such a (permanent magnet) electric motor module can drive at any desired speed, as instructed by the controller. When inside the roller, the roller rotates in either direction as the electric motor module is powered.

According to a further preferred embodiment, the drive system module comprises at least one engagement member, which has an annular shaped body and comprises a first engagement structure for a rotationally rigid engagement with a rotating part of the drive system module. Preferably, the at least one engagement member comprises a second engagement structure for a rotationally rigid engagement with an inner surface of the roller.

Thus, the engagement member may be adapted for torque transmission between the rotating part and the roller. According to the example, where the drive system module comprises an electric motor, the rotating part forms a part of the rotor and is generally called back iron. According to the alternative example, where the drive system module comprises a controller, the rotating part may form a tubular casing.

According to one example, a first one of the engagement member and the rotating part has a series of circumferentially evenly spaced axially extending protrusions. The other one of the engagement member and the rotating part has an identically spaced series of like-sized axially extending recesses. When the engagement member and the rotating part are brought together, the protrusions mate or fit into the recesses, thereby effectively joining the engagement member and the rotating part and transferring rotational motion from one to the other. This ensures a strong mechanical coupling. The engagement member and the rotating part are thereby coupled by interference.

According to one example, the engagement member is axially aligned with the mechanical connection arrangement of the drive system module. It creates conditions for a design of the engagement member allowing access to the mechanical connection arrangement for fastening adjacent modules to each other.

According to one example, the engagement member is releasably attached to the rotating part of the drive system module. It creates conditions for an easy and time-efficient disassembly of the drive system for example for servicing.

According to a further development of the last-mentioned embodiment, the annular shaped body of the at least one engagement member is adapted to be arranged axially adjacent the rotating part of the drive system module. This arrangement of the engagement member creates conditions for an optimum design of the rotating part of the drive system module. In other words, the rotating part of the drive system module may be designed for optimum performance of the module. More specifically, the positioning of the annular shaped body of the engagement member axially adjacent rotating part creates conditions for a robust construction. In the example of an electric motor module, the outer tube (rotor) may be arranged with a maximum radial extension so that it may be positioned as close as possible to the inner boundaries of the roller and have a continuous radially outer surface in the axial direction, since the axially adjacent engagement member will not consume any additional space or a minimum of additional space conflicting with the electric motor design.

According to a further development of the last-mentioned embodiment, the at least one engagement member is adapted to rotationally rigidly engage the rotating part of the drive system module with a rotating part of the other drive system module. More specifically, the engagement member may form an axially intermediate part between two adjacent drive system modules.

According to a further embodiment, the drive system module comprises a controller for controlling an operation of the drive system. The controller may be adapted to provide the correct power to the electric motor modules from an external supply or internal batteries in the drive system.

According to a further aspect, the invention regards a drive system to be arranged in a roller for rotating the roller, wherein the drive system comprises a plurality of axially interconnected drive system modules comprising a first drive system module of the type defined in any one of the above embodiments and examples and a second drive system module of the type defined in any one of the above embodiments and examples, wherein the first and second drive system modules are connected to each other. Preferably, the first and second drive system modules are connected to each other via the mechanical connection arrangements forming a static connection.

According to one example, the system comprises a controller module in combination with one or several electric motor modules.

According to a further embodiment, each one of the first drive system module and the second drive system module comprises an electrical motor, wherein the electrical motors of the first and second drive system modules are of identical design, providing the same performance.

According to an example with a plurality of electric motor modules, each having a separate shaft, the modules may be arranged in a co-axial relationship with interconnected stator shafts via the mechanical connection arrangements.

According to a further embodiment, the drive system comprises a single controller, which is adapted to control operation of the electrical motors of the first drive system module and the second drive system module. The single controller may be arranged in a separate drive system module or, alternatively be integrated in a drive system module together with an electrical motor.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a perspective, exploded and partly cut view of a blind, roller and drive system according to one embodiment,
Fig. 2 is a perspective view of the blind, roller and drive system in figure 1 in a final assembled state,
Fig. 3 is a perspective exploded view of the drive system in figure 1,
Fig. 4 is a perspective view of the drive system in figure 3 with two drive system modules in a final assembled state,
Fig. 5 is a perspective view of two drive system modules adapted for engagement for the drive system in figure 3,
Figure 6 is a perspective cut view of the two drive system modules in figure 5 in an interconnected state,
Figures 7a-c shows three different assembly states of the two drive system modules in figure 5,
Figure 8 is a perspective view of an end cap and a drive system module adapted for engagement for the drive system in figure 3,
Figure 9 is a perspective view of an engagement member and a drive system module adapted for engagement for the drive system in figure 3,
Figure 10 is a perspective, partly cut view of a drive system module comprising a controller according to the drive system embodiment in figure 1,
Figure 11 is a perspective view of a drive system module comprising an electric motor according to the drive system embodiment in figure 1,
Fig. 12 is a perspective view of a drive system according to a further embodiment with three drive system modules in a final assembled state,
Fig. 13 is an exploded view of a drive system module according to the drive system embodiment in figure 1,
Fig. 14a is a perspective exploded view of a drive system according to a first alternative,
Fig. 14b is an enlarged perspective view of an engagement member in the drive system in fig. 14a,
Fig. 15a is a perspective exploded view of a drive system according to a second alternative,
Fig. 15b is an enlarged and partly cut perspective view of a section of the drive system in fig. 15a,
Fig. 16a is a perspective view of two drive system modules adapted for engagement for a drive system according to a third alternative,
Fig. 16b is an enlarged perspective view in section of the mating ends of the two drive system modules in fig. 16a,
Fig. 16c is an enlarged view of an electrical contact of one of the two drive system modules in fig. 16b,
Fig. 17a is a perspective view of two drive system modules adapted for engagement for a drive system according to a fourth alternative,
Fig. 17b is an enlarged perspective view in section of the mating ends of the two drive system modules in fig. 17a,
Fig. 18a is a perspective view of two drive system modules adapted for engagement for a drive system according to a fifth alternative,
Fig. 18b is an enlarged perspective view in section of the mating ends of the two drive system modules in fig. 18a and
Fig. 18c shows the two drive system modules in fig. 18 in a connected state.

### DETAILED DESCRIPTION OF EXAMPLE EMBODIMENTS

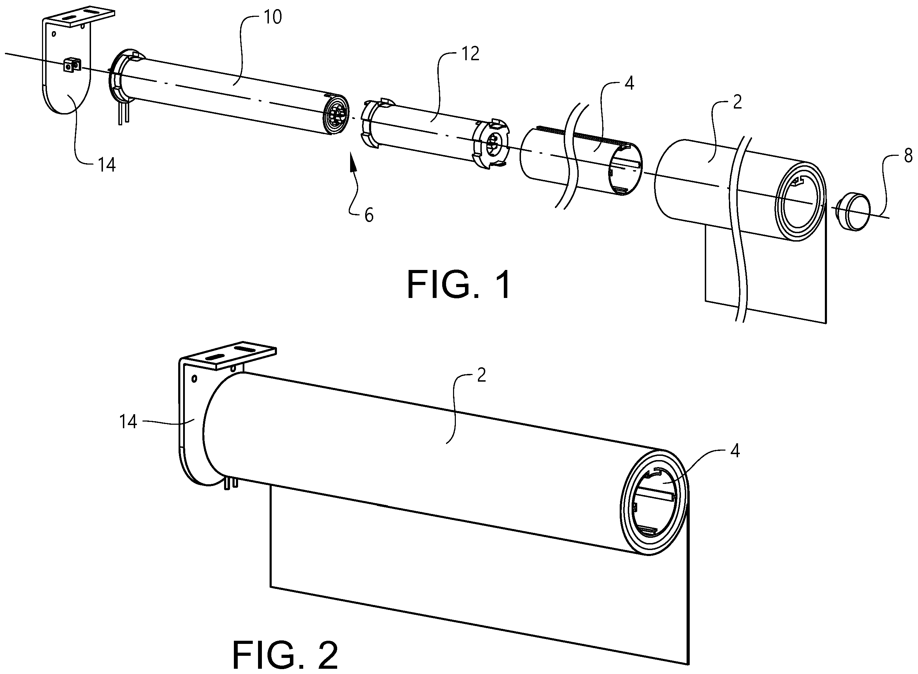

Fig. 1 is a perspective, exploded and partly cut view of a blind 2, a roller 4 and a drive system 6 according to one embodiment. The blind 2 comprises a roll of cloth arranged on the roller 4 for being unrolled from, or rolled onto, the roller. The roller 4 is a hollow cylindrical elongated element. Further, the roller 4 may be of aluminium, steel or even cardboard. The drive system 6 is arranged in the roller 4 for rotating the roller. The drive system 6 has an axial extension direction 8 commensurate with a rotational axis of the roller 4. Further, the drive system 6 comprises two drive system modules 10,12, which are directly connected to each other. Each one of the two drive system modules 10,12 has the appearance of an elongated circular cylinder. The drive system 6 is arranged on a support plate 14 at one end. The support plate 14 is in turn adapted to be rigidly attached to a wall. Fig. 2 is a perspective view of the blind, roller and drive system in figure 1 in a final assembled state, wherein the roller is arranged horizontally, above a window. The roller may however be arranged also in other positions, such as below a window or vertically, at the side of a window.

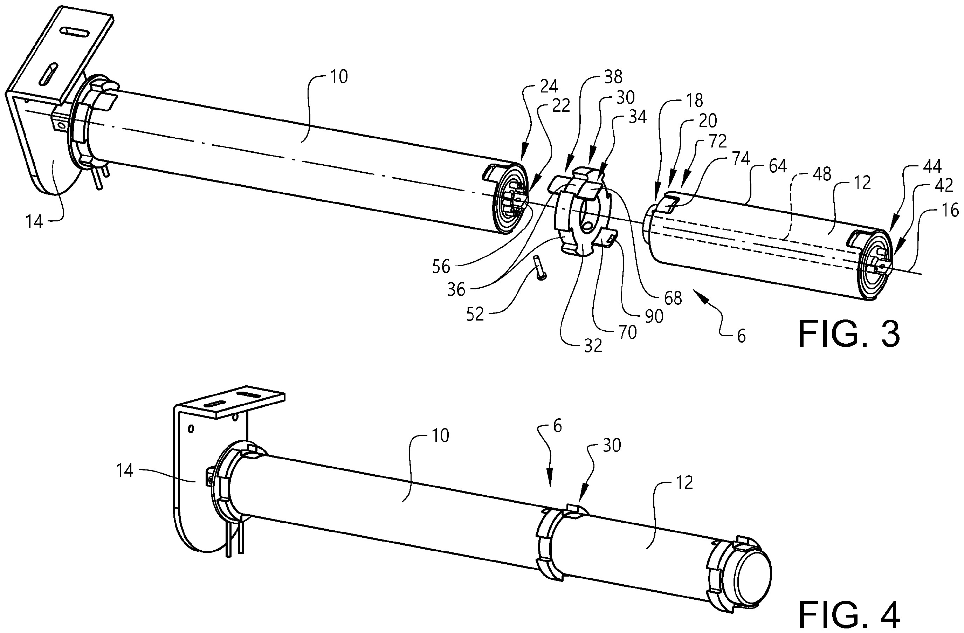

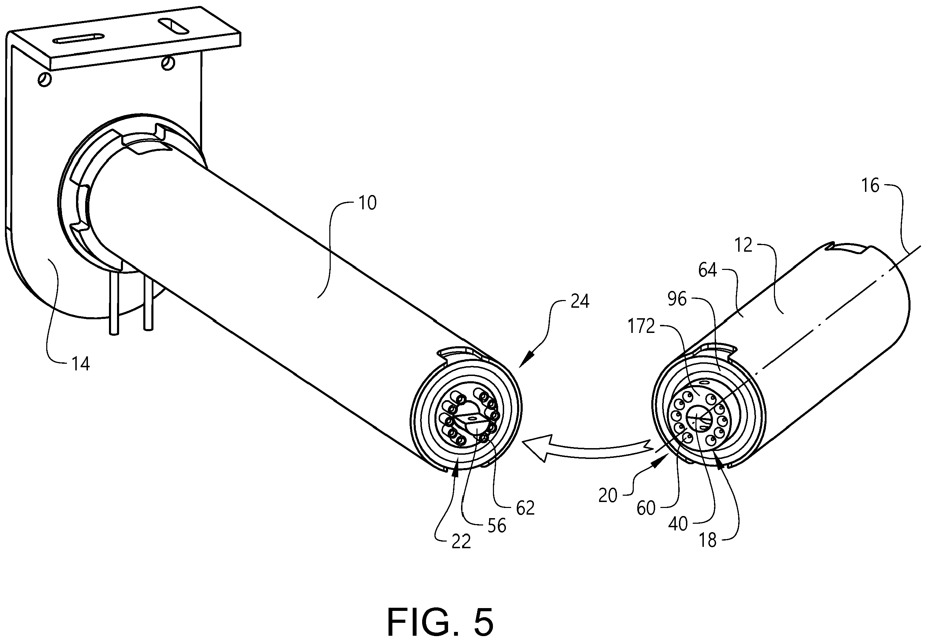

Fig. 3 is a perspective exploded view of the drive system 6 in figure 1. A first one 12 of the drive system modules has an axial extension direction 16 and comprises a first mechanical connection arrangement 18 at a first end 20 in the axial extension direction 16 for a static connection with a complimentary shaped mechanical connection arrangement 22 at an end 24 of a second one 10 of the drive system modules. Turning now also to figure 5. The first mechanical connection arrangement 18 comprises a first mechanical connection means 40 positioned radially centrally at the first end 20 of the first drive system module 12. The first mechanical connection means 40 comprises a shaft end extending in parallel with the axial extension direction 16 of the first drive system module 12.

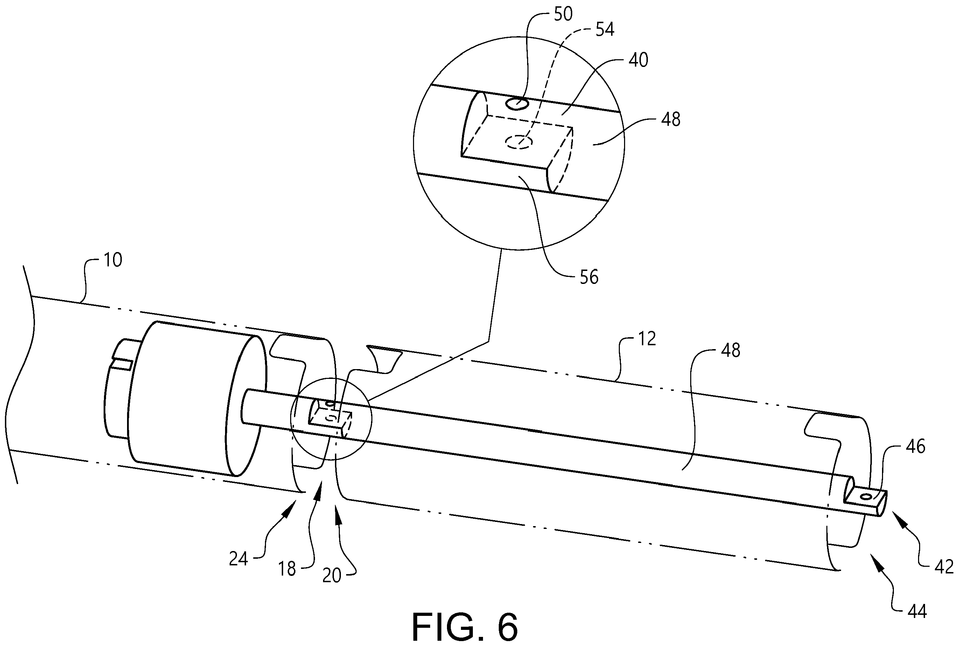

Further, the first drive system module 12 comprises a second mechanical connection arrangement 42 at a second end 44, see figure 3, in the axial extension direction 16. The first mechanical connection arrangement 18 and the second mechanical connection arrangement 42 are of the same type. More specifically, the first mechanical connection arrangement 18 and the second mechanical connection arrangement 42 are arranged in an inverse relationship relative to one another. More specifically, the second mechanical connection arrangement 42 comprises a second mechanical connection means 46, see also fig. 6. The first drive system module 12 comprises a single shaft 48 extending in the axial extension direction 16 and wherein the shaft ends are adapted to form the first mechanical connection means 40 at the first end 20 and the second mechanical connection means 46 at the second end 44. More specifically, each one of the first mechanical connection means 40 and the second mechanical connection means 46 is formed by a shaft portion in the form of a half circle in cross section. The half circular shaped shaft portions of the first mechanical connection means 40 and the second mechanical connection means 46 are arranged on opposite sides of the shaft 48 in a direction perpendicular to a shaft extension direction. Thus, the half circular shaped shaft portions of the first mechanical connection means 40 and the second mechanical connection means 46 are arranged in a mirrored relationship with regard to a plane commensurate with a center axis of the shaft 48.

Further, the first drive system module 12 is adapted to be arranged within the roller 4 in a way that the axial extension direction 16 is in parallel with a rotational axis 8 of the roller.

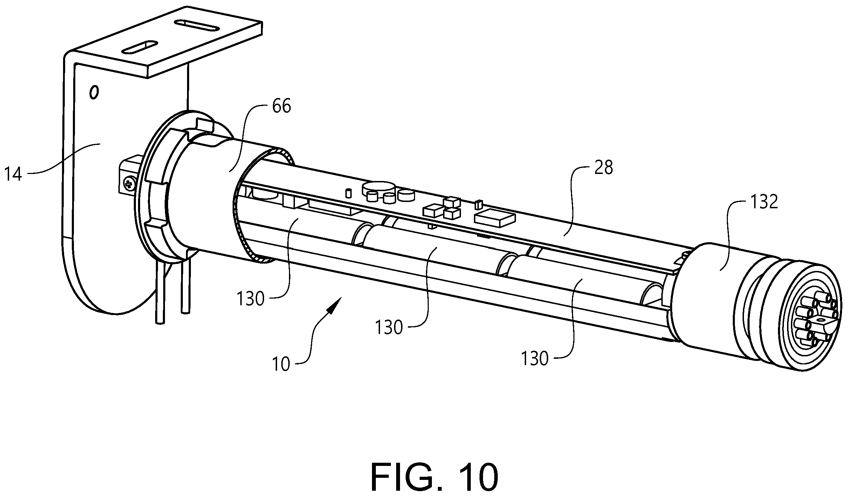

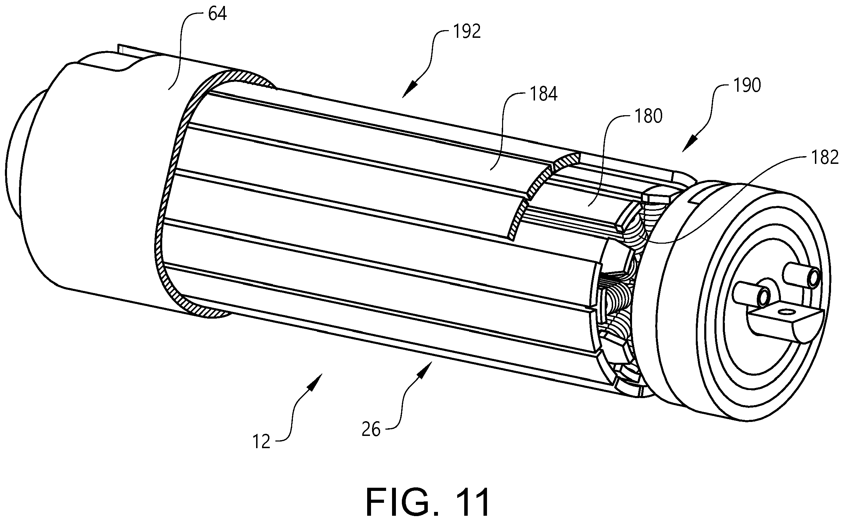

Further, the first drive system module 12 comprises an electric motor 26, see figure 11, and the second drive system module 10 comprises a controller 28, see figure 10.

The drive system 6 comprises an engagement member 30, see figure 3, which has an annular shaped body 32 and comprises a first engagement structure 34 for a rotationally rigid engagement with a rotating part of the first drive system module 12 and a second engagement structure 36 for a rotationally rigid engagement with an inner surface of the roller. Further, the engagement member 30 comprises a third engagement structure 38 for a rotationally rigid engagement with a rotating part of the second drive system module 10. The engagement member 30 may be formed in a plastic material. Fig. 4 is a perspective view of the drive system in figure 3 with the two drive system modules 10,12 in a final assembled state.

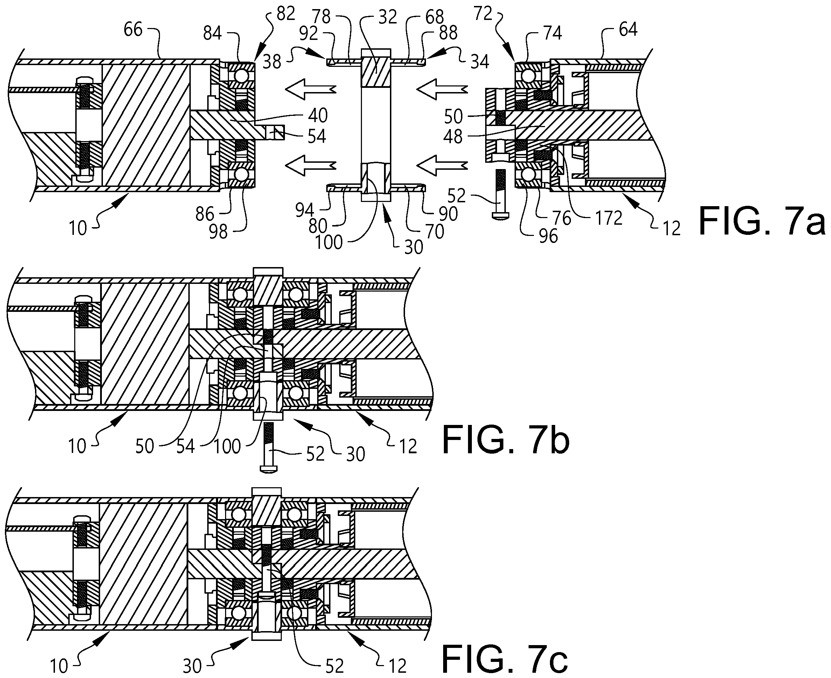

The first engagement structure 34 comprises a plurality of circumferentially evenly spaced protrusions 68,70 projecting axially in a first direction from the annular shaped body 32. The rotating part 64 of the first drive system module 12 comprises a complimentary shaped engagement structure 72. More specifically, the engagement structure 72 comprises an identically spaced series of like-sized axially extending recesses 74,76. When the engagement member 30 and the rotating part 64 are brought together, the protrusions 68,70 mate or fit into the recesses 74,76, thereby effectively joining the engagement member 30 and the rotating part 64 and transferring rotational motion from one to the other. More specifically, the first engagement structure 34 comprises two protrusions 68,70, which are arranged opposite each other. The third engagement structure 38 comprises a plurality of circumferentially evenly spaced protrusions 78,80, see figure 7a, projecting axially in a second direction, opposite the first direction, from the annular shaped body 32. The rotating part 66 of the second drive system module 10 comprises a complimentary shaped engagement structure 82. More specifically, the engagement structure 82 comprises an identically spaced series of like-sized axially extending recesses 84,86. More specifically, the third engagement structure 38 comprises two protrusions 78,80, which are arranged opposite each other. Further, the protrusions 78,80 are arranged circumferentially at the same positions as the protrusions 68,70. The protrusions 68,70,78,80 are formed as arc-shaped tabs.

Turning now to figure 6. The first mechanical connection arrangement 18 of the first module 12 comprises a portion 50 extending in a transverse direction relative to the axial extension direction 16 for rigidly connecting the drive system modules 10,12 to each other. More specifically, the connection portion 50 is formed by a hole extending through the half-circular shaft end 40 for receipt of a fastener 52, see figure 3. In a similar manner, the mechanical connection arrangement 24 of the second module 10 comprises a connection portion 54 in the form of a hole extending through the half-circular shaft end 56 for receipt of the fastener 52. Thus, by co-axially engaging the shaft ends 40,56, the holes 50,54 will align and the fastener 52 may thereafter be introduced in the holes for rigidly connecting the modules 10,12. The fastener 52 is here in the form of a locking screw.

Turning now to figure 5. The first drive system module 12 further comprises a first electrical connection arrangement 60 at the first end 20 in the axial extension direction 16 for a connection with a complimentary shaped electrical connection arrangement 62 of the second drive system module 10 for controlling an operation of the first drive system module 12. In other words, the controller in the second drive system module 10 is adapted to control the operation of the electric motor in the first drive system module 12 via the electrical connection arrangements 60,62. One of the electrical connection arrangements 60,62 may comprise a male structure and the other of the electrical connection arrangements 60,62 may comprise a female structure, which are designed for engagement with each other when the modules 10,12 are connected.

Figures 7a-c shows three different assembly states of the two drive system modules 10,12. The engagement member 30 is adapted to rotationally rigidly engage the rotating part 64 of the first drive system module 12 with the rotating part 66 of the second drive system module 10 via the first engagement structure 34 and the third engagement structure 38 as described above.

Each one of the tabs 68,70,78,80 has a latch over portion 88,90,92,94 extending radially inwards from an axially distant end of the tab for locking the engagement member to the drive system module 10,12. Each one of the modules 10,12 comprises a bearing 96,98. The outer peripheral surface of the bearing 96,98 is affixed to the inner surface of its associated tubular rotating part 64,66. The bearings 96,98 are in the form of roller-element bearings, wherein an outer race is rotationally rigidly connected to its associated rotating part 64,66. Further, the respective latch over portion 88,90,92,94 is positioned at an axial distance from the annular shaped body 32 commensurate with an axial extension of the outer race so that the latch over portion 88,90,92,94 may latch over the edge of the outer race. The snap over feature provides for a releasable connection.

The annular shaped body 32 has a thickness in the radial direction, which is about half the radius of the annular shaped body. Further, the annular shaped body 32 has a length in the axial direction, which is about the same as its thickness. Such dimensions of the annular shaped body 32 creates conditions for a robust construction. More specifically, the annular shaped body 32 has a radial extension substantially commensurate with a radial extension of the bearing 96. Further, the annular shaped body 32 has an axial extension substantially commensurate with an axial extension of the mechanical connection arrangement 20.

The annular shaped body 32 of the engagement member 30 is in figure 7b axially aligned with the mechanical connection arrangement 18,22 of the drive system modules 10,12. The engagement member 30 further comprises a radially extending hole 100 through the annular shaped body 32 for allowing access to the mechanical connection arrangement 18,22 for fastening adjacent modules to each other via the fastener 52. More specifically, the circumferential position of the tabs 68,70 are matched with the circumferential position of the through hole 100 so that the through hole 100 will be in line with the holes 50,54 in the shaft ends.

A distant one of the holes 50,54 in relation to the through hole 100 has a threading and the fastener 52 is provided with a complimentary threading for a mating connection, see figure 7c.

The rotating part 66 of the second drive system module 10 is typically made of metal, such as steel, aluminium or the like. Alternatively, the housing may be made of plastic material.

Further, the second drive system module 10 comprises two relatively short shafts arranged in a co-axial relationship, one at each end in the axial direction, wherein the shaft at the end adjacent the first drive system module 12 comprises the shaft end 40 and the other shaft comprises the shaft end 120.

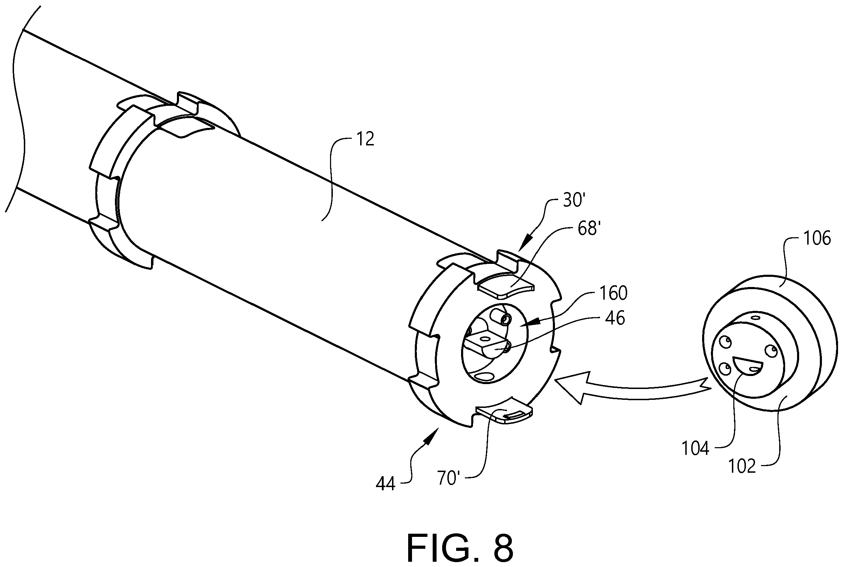

Figure 8 is a perspective view of an end cap 102 adapted to be connected to the first drive system module 12 at the second end 44 in the axial direction 16. The end cap 102 comprises an opening 104 which is complimentary shaped and sized with the mechanical connection means 46 in the form of the shaft end of the first drive system module 12. Thus, the opening 104 has a half circular shape in a cross section for receipt of the shaft end 46. Further, the end cap 102 has a radially external surface 106 adapted to fit under the tabs 68',70' of an engagement member 30' arranged at the second end 44 of the first drive system module 12.

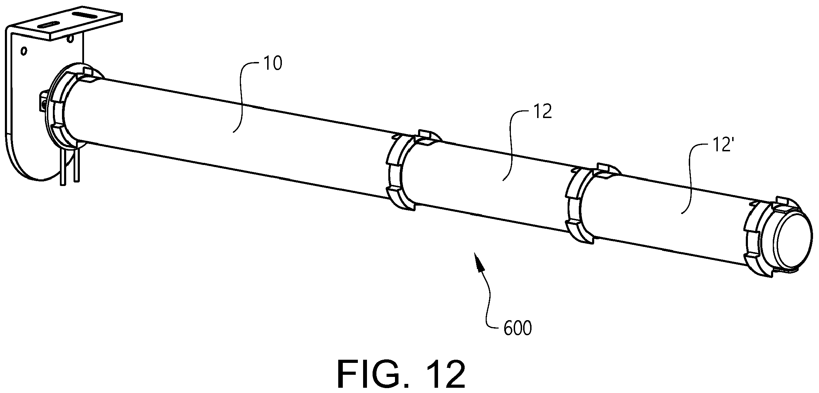

Turning now to figure 5, the first electrical connection arrangement 60 at the first end 20 of the first module 12 (with the electric motor) has a first number of electrical connectors for mating with the complimentary shaped electrical connection arrangement 62 of the second module (with the controller). The electrical connectors provides for controlling the electric motor via three contacts and also wiring for a sensor for detecting rotational speed/position and a sensor for detecting temperature in the motor. Turning now again to figure 8, the first module 12 (with the electric motor) comprises a second electrical connection arrangement 160 at the second end 44 of the first module 12 with a second number of electrical connectors. The second number of electrical connectors is less than the first number of electrical connectors since there is no need for the sensors in case the first module is connected to a further module with an electric motor (see for example the embodiment in figure 12). The electrical connection arrangements 60,62 form a secondary mechanical connection between the modules 10,12.

Turning now again to figure 5, the bearing 96 of the first drive system module 12 is arranged between the inner static shaft 48 and the outer rotating part 64 in the form of the outer tubular casing. Further, the first drive system module 12 comprises an intermediate piece 172 arranged radially between the shaft 48 and the outer tubular casing 64. The intermediate piece may be formed in a plastic material. Further, the intermediate piece 172 comprises the electrical connection arrangement 60 in the form of a plurality of circumferentially spaced axial through-holes for wiring. Further, the intermediate piece 172 comprises a seat for the bearing 96 on a radially outer side of the intermediate piece. In other words, the inner peripheral surface of the bearing 96 is affixed to the outer surface of the intermediate piece 172. Further, the intermediate piece 172 comprises a radially inner surface for a fixed engagement with the shaft. Further, a radially outer surface of the outer race of the bearing 96 is arranged in contact with an inner surface of the outer rotating tube 64 or in close vicinity of the rotating tube. Further, the intermediate piece 172 forms an end wall of the module 12 in the axial direction.

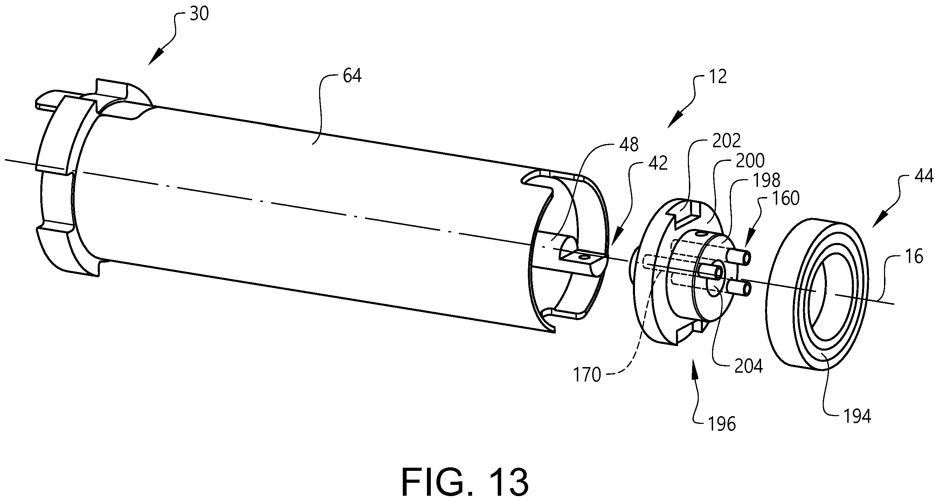

The first drive system module 12 comprises a similar arrangement of bearing 194 and intermediate piece 196 at its opposite, second end 44, which is shown in figure 13, wherein the static shaft is supported at both ends. The intermediate piece 196 comprises a first circular cylindrical portion 198, which defines a seat for the bearing 194 on a radially outer side surface. Further, the intermediate piece 196 comprises a second circular cylindrical portion 200, which has a larger radial extension than the first circular cylindrical portion 198. Further, the second circular cylindrical portion 200 has a somewhat smaller radial extension in relation to the bearing 194. Further, the second circular cylindrical portion 200 has a recess 202 at its radially outer periphery for receipt of a latch over portion of a tab of an associated engagement member. The intermediate piece 196 further has a central through hole 204 for receipt of the shaft 48. Further, the intermediate piece 196 forms a one-piece unit. Further, the intermediate piece 196 comprises a plurality of circumferentially spaced axial through-holes 170 for electrical conductors.

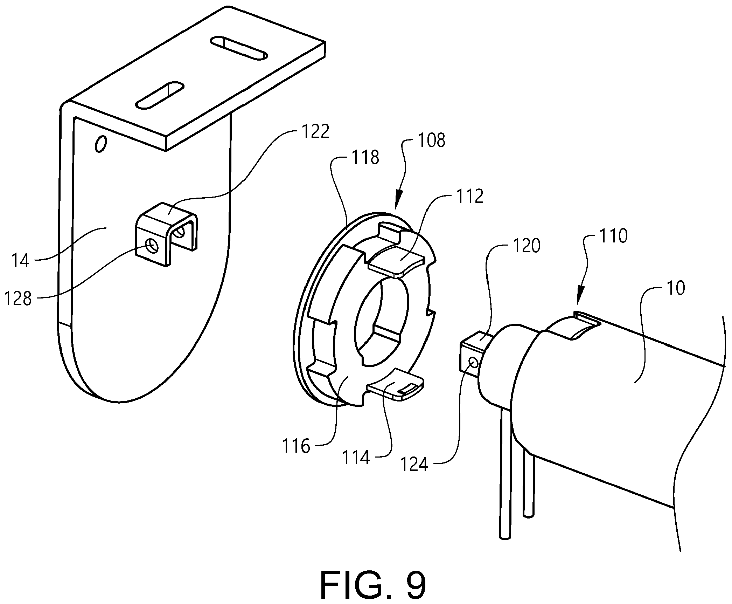

Figure 9 is a perspective view of an engagement member 108 adapted to be connected to the second drive system module 10 at an end 110 distant from the first drive system module 12. The engagement member 108 has a design similar to the engagement member 30 described above with the difference that there are only tabs 112,114 projecting in one axial direction from the annular shaped body 116. The engagement member 108 further comprises a plate 118 on the other side of the annular shaped body 116, wherein the plate 118 has a central through hole for receipt of the associated shaft end 120 of the module 10. The shaft end 120 is adapted for a rigid connection with a receiving portion in the form of a bracket 122 projecting from the support plate 14. More specifically, the shaft end 120 and the bracket 122 has complimentary shapes for a mating relationship. Further, each one of the shaft end 120 and the bracket 122 has a hole 124,128, which are adapted to form an in-line relationship when the shaft end 120 is received in the bracket 122 for receipt of a fastener, wherein the static part of the module may be rigidly connected to the support plate 14.

Figure 10 is a perspective, partly cut view of the second drive system module 10 comprising the controller 28. Further, the second drive system module 10 comprises a plurality of batteries 130 operationally connected to the controller for providing power. Further, the second drive system module 10 comprises a brake arrangement 132. When retracting (raising) a window blind, the motor exerts a certain force (torque) to achieve this, however the same force is acting to un-wind the motor. The brake arrangement 132 is adapted to prevent the blind un-winding, wherein a brake force is applied of at least the force required to retract.

Figure 11 is a perspective view of the first drive system module 12 comprising the electric motor 26. The electric motor 26 is of a type with inner stator 190 and outer rotor 192. The inner stator 190 comprises a steel frame or cage 180 with windings 182. When electricity is passed through the windings an alternating electrical field is achieved. The outer rotor 192 comprises the outer tubular casing 64 of steel, which is internally fitted with a plurality of evenly circumferentially spaced magnets 184, which are attracted and repelled by the alternating magnetic field causing the rotor to rotate. The magnets 184 are permanent magnets and may be of any suitable material, such as neodium-iron-boron. A centre axis of the shaft 48 is commensurate with a rotational axis of the rotor 192.

Fig. 12 is a perspective view of a drive system 600 according to a further embodiment with three drive system modules 10,12,12' in a final assembled state. This embodiment differs from the first embodiment in fig.2 in that a further drive system module 12' is connected to the first drive system module 12. The further drive system module 12' is connected to the first drive system module 12 at its second end 44 opposite the first end 20 in the axial direction in a similar manner as has been described above for the interconnection between the first end second modules 10,12. The further drive system module 12' comprises an electric motor of the same type as the first drive system module 12. More specifically, the further drive system module 12' is identical with the first drive system module 12.

The controller module 10 is adapted to power all of the motor modules 12,12', and uses feedback from sensors within the first motor module 12 to drive the motor modules in different ways to optimise the positioning, speed and torque requirements of a particular application. The controller may communicate wirelessly, or through a serial link, to a handset, wireless device or building control system.

Further, the protrusions of the engagement member between the motor modules 12,12' and the associated recesses of the rotors are adapted so that an accurate alignment is maintained between the rotors so that the magnetic fields align.

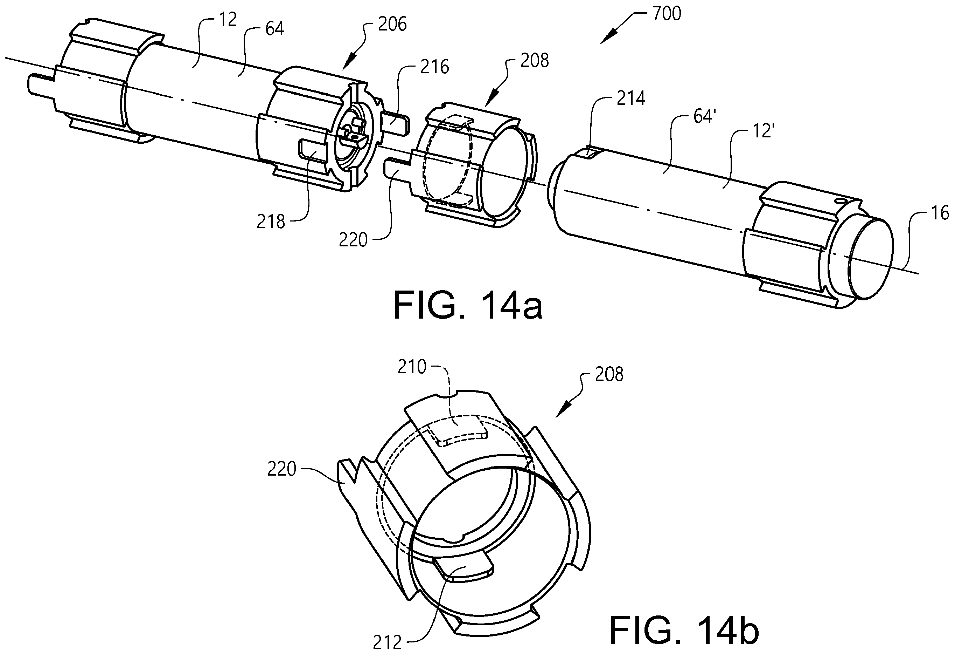

Fig. 14a-b show a drive system 700 according to a first alternative. For ease of presentation, only the main differences to the drive system in figure 12 will be described. The drive system 700 comprises a pair of engagement members 206, 208 adapted to rotationally rigidly engage the rotating part 64 of the drive system module 12 with a rotating part 64' of the other drive system module 12'. The two engagement members 206, 208 are identical. Each one of the engagement members 206, 208 has a tubular shape and is adapted to slide over the rotating part 64,64' of the associated drive system module 12,12'. The wall thickness of the engagement member is relatively thin in order to keep the overall diameter as small as possible. More specifically, the thickness of the engagement member in the radial direction is not more than 20% and preferably less than 10% of the radius of the engagement member. Further, the length of the engagement member in the axial direction is about the same as the diameter of the engagement member. Further, the engagement member 208 has two tabs 210,212 of similar design as has been described above for engagement with an associated recess 214 in the rotating part 64', which is open in the axial direction, wherein the tabs are located on an inner side surface of the tubular shaped member 208. Further, the engagement member 208 has a projection 216 projecting in the axial direction 16 and a complimentary shaped recess 218 arranged on an opposite side. By arranging the two modules 12,12' in such a way circumferentially relative to one another that the projection 220 of one engagement member 208 axially faces the recess 218 of the other engagement member 206, the engagement members 206,208 will engage when the modules 12,12' are moved against each other in the axial direction.

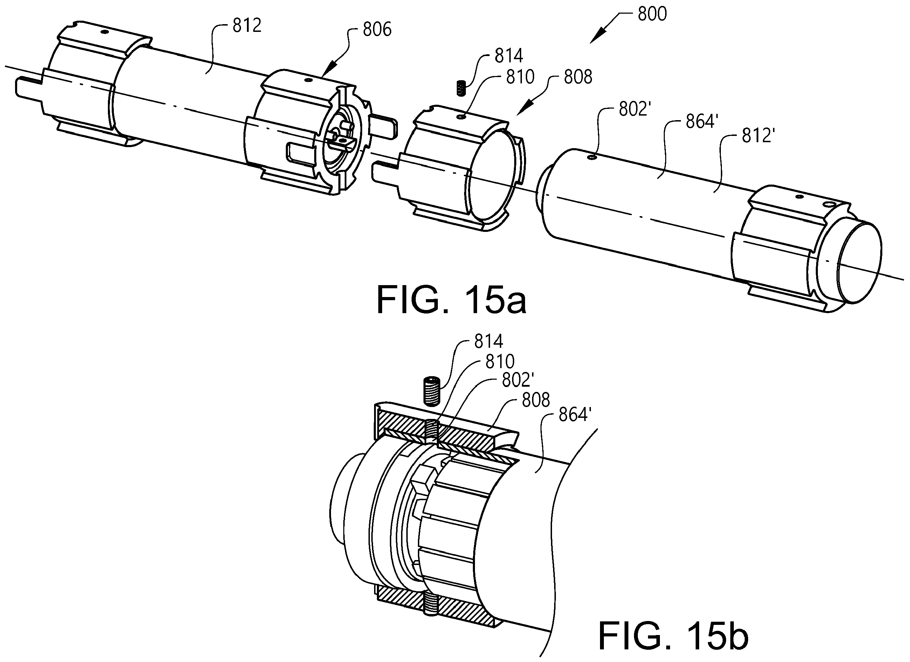

Fig. 15a-b show a drive system 800 according to a second alternative. For ease of presentation, only the main differences to the drive system in figure 14 will be described. The drive system 700 comprises two drive system modules 812,812'. The drive system module 812' differs from the drive system module 12' in figure 14 in that it has a radial through hole 802' in the rotating part 864' forming the outer casing instead of the axial recess 214. Further, the drive system 800 comprises a pair of engagement members 806, 808. The engagement member 808 has a radial through hole 810 instead of the inner tabs 210,212. The engagement member 808 is adapted to be arranged on the rotating part 864' of the module 812' in such a circumferential relative position that the through holes 802',810 align, see figure 15b. Further, the drive system 800 comprises a fastener 814 for being received in the through holes 802',810 for locking the engagement member 808 to the rotating part 864'.

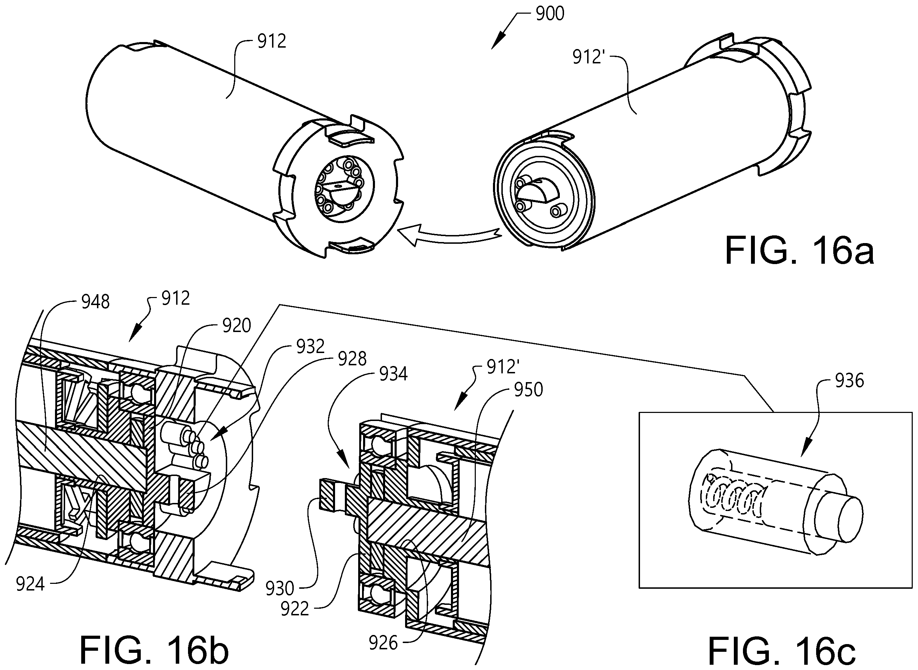

Fig. 16a-b show a drive system 900 according to a third alternative. For ease of presentation, only the main differences to the drive system in figure 5 will be described. The drive system 900 comprises two drive system modules 912,912', each one being provided with an electrical motor. Each one of the drive system modules 912,912' comprises an intermediate piece 920,922, which forms a closed wall in the axial direction. The intermediate piece 920,922 comprises a circular reception 924,926 at an inner side of the wall for receipt of an end of the stationary shaft 948,950. Further, the intermediate piece 920,922 comprises a projection 928,930 extending axially and coaxially with the circular reception 924,926. The projection 928,930 has a similar design and function as the shaft ends of the drive system in figure 5. The projection 928,930 is formed in a one-piece unit with the wall of the intermediate piece. Thus, the projection 928,930 forms a shaft end in a plastic material. Further, each one of the drive system modules 912,912' comprises an electrical connection arrangement 932,934, which differs from the one in figure 5 in that the electrical contact elements 936 are spring loaded, see figure 16c.

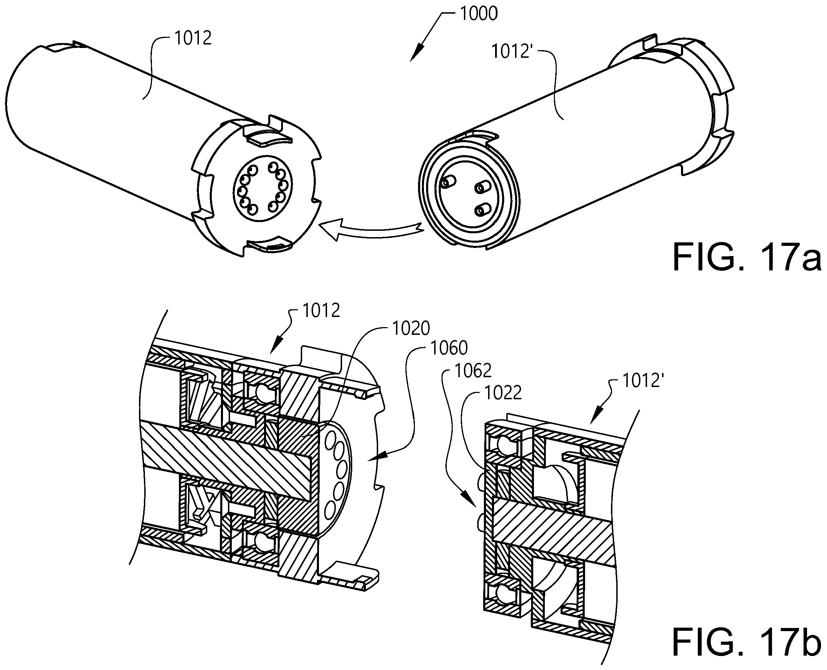

Fig. 17a-b show a drive system 1000 according to a fourth alternative. For ease of presentation, only the main differences to the drive system in figure 16 will be described. The drive system 1000 comprises two drive system modules 1012,1012'. Each one of the drive system modules 1012,1012' comprises an intermediate piece 1020,1022, which forms a closed wall in the axial direction. The intermediate piece 1020,1022 differs from the intermediate piece 920,922 in figure 16 in that it does not comprise any axially extending projection 928,930 for connection to an adjacent module. Further, the intermediate piece 1020,1022 comprises an electrical connection arrangement 1060,1062 similar to the electrical connection arrangement 60,62 in the drive system in figure 5. Here, the electrical connection arrangements 1060,1062 in the form of a male-female structure form a primary mechanical connection between the modules 10,12. This design relies on the engagement member for holding the modules together in the axial direction.

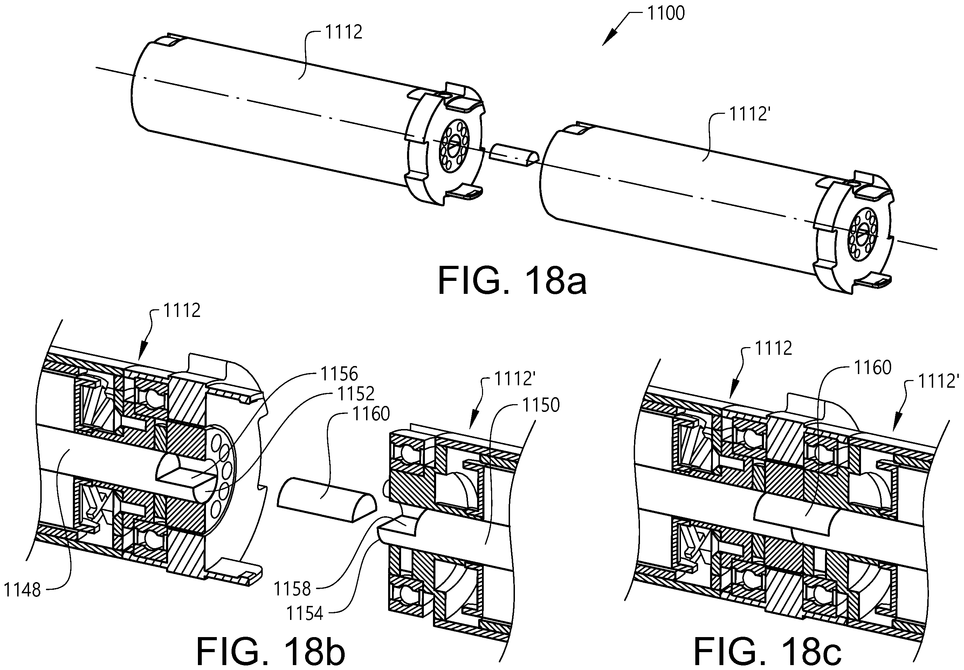

Fig. 18a-c show a drive system 1100 according to a fifth alternative. For ease of presentation, only the main differences to the drive system in figure 12 will be described. The drive system 1100 comprises two drive system modules 1112,1112', each one being provided with an electrical motor. Each one of the drive system modules 1112,1112' comprises a stationary shaft 1148,1150 with a shaft end adapted to form a mechanical connection with an adjacent module. Similar to the embodiment described in association with figure 5, the respective shaft end has the form of a half circle in cross section. However, the shafts 1148,1150 are arranged relative to one another in a way that the distal end surfaces 1152,1154 of the shafts 1148,1150 meet, wherein the recessed parts 1156,1158 of the shaft ends face upwards. The drive system 1100 further comprises a separate intermediate component 1160 for connecting the shaft ends. Similar to the shaft ends, the separate intermediate component 1160 has the form of a half circle in cross section and has an axial length similar to the combined axial lengths of the recessed parts 1156,1158 of the shaft ends, wherein the separate intermediate component 1160 and the associated recessed parts 1156,1158 of the shaft ends together form a shaft portion of circular cross section.

There are many designs of the roller, and specifically the inner engagement structure, according to fabricator preference, so the design of the second engagement structure 36 may differ for the roller variations. The second engagement structure 36 comprises an outer surface of a circumferentially varying diameter. More specifically, the second engagement structure 36 comprises a plurality of circumferentially spaced elongated recesses adapted for receipt of elongated projections extending radially inwards from an inner tubular surface of the roller. Preferably, the first engagement structure 34 remains the same for all roller variations, so it is just the second engagement structure 36 that changes for different designs.

The phase wires for the electric motor are terminated at either end of the module so that when modules are combined the phase wires connect to complimentary phase wires of an adjacent motor module. At the end module a star point may be formed.

The electric motor described above creates conditions for infinite speed variation between at least 0 and 100rpm and possibly even at speeds in excess of 400rpm. Further, the electric motor described above creates conditions for the drive system being transmissionless or in other words not requiring any gearbox. Gearboxes are normally noisy and slow to operate, wherein this design without a gearbox provides for a quicker and quieter operation. Another advantage is the motor is very energy efficient in the motor design is efficient and there is only one moving part, not an entire gearbox of moving parts, where each moving part will suffer an efficiency loss.

According to one alternative to the embodiments described above, a base module could comprise a controller and motor combined, so if there is need for additional torque, a second, third or fourth motor module could be added.

Furthermore, the drive system may comprise a module with a spring device. When a roller blind un-winds, the weight of the cloth helps the roller to un-wind, so the motor is doing little work in the down direction, but in the up direction the motor has to work hard to lift the full weight of the cloth. The spring device would comprise a spring adapted to be wound up as the blind travels in the down direction, so this spring tension (charge) can be used to assist the motor as the blind raises. The function may be seen as equalising the effort the motor has to make between the up and down direction. This would make the motor more efficient and would allow a larger blind to be operated than a motor without spring assistance.

It is to be understood that the present invention is not limited to the embodiments described above and illustrated in the drawings; rather, the skilled person will recognize that many changes and modifications may be made within the scope of the appended claims. For example, according to an alternative to the embodiments described, the controller, brake and battery may be arranged in separate drive system modules. Further, the bearings may be of different types such as ball bearings and needle bearings. Further, as a complement or alternative to the embodiments above, the outer peripheral surface of the bearing may be supported and/or affixed to the inner surface of the engagement member. Further, any reference sign in the claims should not be construed as limiting the scope.

Further, the shaft ends of the mechanical connection arrangements described in one embodiment above are arranged in a co-axial relationship with shaft ends designed for an axial overlap. According to an alternative, one shaft end may be hollow for receipt of the other shaft end, wherein the other shaft end axially protruding into the first shaft end a certain axial distance. The shaft ends may then either have a circular cross section shape, wherein a fastener may be used for rotationally locking the shaft ends together, or the shaft ends may have a complimentary non-circular cross section, wherein a fastener may not be required for rotationally locking the shaft ends together.

## Claims

1. A drive system module (12) for a drive system (6) for being arranged in a roller (4) for rotating the roller, wherein the drive system module (12) has an axial extension direction (16) and is adapted for connection to another drive system module (10) at a first end (20) in the axial extension direction.

2. A drive system module according to claim 1, the drive system module (12) comprises a first mechanical connection arrangement (18) at the first end (20) in the axial extension direction for a static connection with a complimentary shaped mechanical connection arrangement (22) of said another drive system module (10).

3. A drive system module according to claim 2, wherein the first mechanical connection arrangement (18) comprises a first mechanical connection means (40) positioned radially centrally at the first end (20) of the drive system module.

4. A drive system module according to claim 2 or 3, wherein the first mechanical connection means (40) comprises a shaft end extending in parallel with the axial extension direction (16) of the drive system module.

5. A drive system module according to any one of claims 2-4, wherein the first mechanical connection arrangement (18) comprises a portion (50) extending in a transverse direction relative to the axial extension direction (16) of the drive system module (12) for rigidly connecting the drive system modules (10,12) to each other.

6. A drive system module according to any preceding claim, wherein the drive system module (12) comprises a first electrical connection arrangement (60) at the first end (20) in the axial extension direction (16) for a connection with a complimentary shaped electrical connection arrangement (62) of the other drive system module (10) for controlling an operation of one of the drive system modules (10,12) by or via the other one of the drive system modules (10,12).

7. A drive system module according to any preceding claim, wherein the drive system module (12) comprises a second mechanical connection arrangement (42) at a second end (44) in the axial extension direction (16) opposite the first end (20) for a static connection with a complimentary shaped mechanical connection arrangement of a further other drive system module (12').

8. A drive system module according to claim 7, wherein the first mechanical connection arrangement (18) and the second mechanical connection arrangement (42) are of the same type.

9. A drive system module according to claim 8, wherein the first mechanical connection arrangement (18) and the second mechanical connection arrangement (42) are arranged in an inverse relationship relative to one another.

10. A drive system module according to claim 4 and anyone of claims 7-9, wherein the second mechanical connection arrangement (42) comprises a second mechanical connection means (46), wherein the drive system module (12) comprises a shaft extending in the axial extension direction (16) and wherein the shaft ends are adapted to form the first mechanical connection means (40) at the first end and the second mechanical connection means (46) at the second end.

11. A drive system module according to any preceding claim, wherein the drive system module comprises an electric motor (26).

12. A drive system module according to claim 11, wherein the electric motor is of a type with an internal stator (190) and an external rotor (192).

13. A drive system module according to any preceding claim, wherein the drive system module (12) comprises at least one engagement member (30), which has an annular shaped body (32) and comprises a first engagement structure (34) for a rotationally rigid engagement with a rotating part (64) of the drive system module (12).

14. A drive system module according to claim 13, wherein the at least one engagement member (30) comprises a second engagement structure (36) for a rotationally rigid engagement with an inner surface of the roller (4).

15. A drive system module according to claim 13 or 14, wherein the annular shaped body (32) of the at least one engagement member (30) is adapted to be arranged axially adjacent the rotating part (64) of the drive system module (12).

16. A drive system module according to any one of claims 13-15, wherein the at least one engagement member (30) is adapted to rotationally rigidly engage the rotating part (64) of the drive system module (12) with a rotating part (66) of the other drive system module (10).

17. A drive system module according to any preceding claim, wherein the drive system module comprises a controller for controlling an operation of the drive system.

18. A drive system (6) to be arranged in a roller (4) for rotating the roller, wherein the drive system comprises a plurality of axially interconnected drive system modules (10,12,12') comprising a first drive system module (12) of the type defined in any one of the above claims and a second drive system module (10,12') of the type defined in any one of the above claims, wherein the first and second drive system modules are connected to each other.

19. A drive system according to claim 16, wherein each one of the first drive system module (12) and the second drive system module (12') comprises an electrical motor (26) and that the electrical motors of the first and second drive system modules (12,12') are of identical design.
